# EUROPÄISCHE PATENTSCHRIFT

(11) **EP 1 699 676 B1**
(45) Veröffentlichungstag und Bekanntmachung des Hinweises auf die Patenterteilung: **22.02.2017**
(21) Anmeldenummer: 04816349.7
(22) Anmeldetag: 22.12.2004
(51) Int. Cl.: B62D 5/04, H02P 6/24

(54) **VERFAHREN ZUM ABBREMSEN EINES ELEKTROMOTORS UND ELEKTRISCHER ANTRIEB**
METHOD FOR REDUCING THE SPEED OF AN ELECTRIC MOTOR AND ELECTRIC DRIVE
PROCEDE DE RALENTISSEMENT D'UN MOTEUR ELECTRIQUE ET MECANISME D'ENTRAINEMENT ELECTRIQUE

(30) Priorität: 24.12.2003 DE 10361242
(43) Veröffentlichungstag der Anmeldung: 13.09.2006
(73) Patentinhaber: Continental Teves AG & Co. oHG, 60488 Frankfurt am Main (DE)
(72) Erfinder: MENZEL, Marc, 35043 Marburg (DE); KAUFMANN, Tom, 55595 Winterbach (DE); STAUDER, Peter, 55128 Mainz (DE); BÖHM, Jürgen, 65558 Oberneisen (DE)
(86) Internationale Anmeldenummer: PCT/EP2004/053664
(87) Internationale Veröffentlichungsnummer: WO 2005/061304

(56) Entgegenhaltungen:
- EP-A- 0 920 119
- EP-A- 1 318 596
- DE-A1- 3 526 374
- DE-A1- 19 811 992
- US-A- 4 354 147

## Beschreibung

Die Erfindung betrifft ein Verfahren zum Abbremsen oder Anhalten eines mit Gleichstrom betreibbaren Elektromotors, insbesondere eines bürstenlosen Gleichstrommotors, bei Vorliegen eines Fehlers des Elektromotors oder damit verbundener Einheiten, wobei das Vorliegen bestimmter Fehlerzustände überprüft wird und der Elektromotor abgebremst wird, in dem zumindest zeitweise eine dem erkannten, bestimmten Fehlerzustand angepasste Ansteuerung des Elektromotors durchgeführt wird unter Berücksichtigung einer maximalen Belastbarkeit einer mit dem Elektromotors verbundenen elektronischen Ansteuerungseinheit.

Die Erfindung betrifft ebenso einen elektrischen Antrieb für eine Überlagerungslenkung für ein Kraftfahrzeug oder für eine elektromechanische Bremse (EMB), der einen mit Gleichstrom betreibbaren Elektromotor, insbesondere einen bürstenlosen Gleichstrommotor, eine elektronische Steuer- und Regelungseinheit und eine Leistungselektronikeinheit zur Ansteuerung des Elektromotors aufweist, wobei die elektronische Steuer- und Regelungseinheit ein Erkennungsmittel aufweist, zum Erkennen eines Fehlers des Elektromotors und/oder einer damit verbundenen elektronischen Einheit, und wobei die elektronische Steuer- und Regelungseinheit ein Abbrems- oder Anhaltemittel aufweist, zum Abbremsen des Elektromotors, wenn durch das Erkennungsmittel ein Fehler erkannt wurde, in dem das Abbrems- und Anhaltemittel die Leistungselektronik dazu veranlasst, zumindest zeitweise in zumindest einer Motorphase einen Kurzschluss in Abhängigkeit von dem erkannten, bestimmten Fehlerzustand zu erzeugen unter Berücksichtigung einer maximalen Belastbarkeit der Leistungselektronik.

Aus der DE 198 11 992 A1 sind ein Verfahren zum Abbremsen oder Anhalten eines mit Gleichstrom betreibbaren Elektromotors und ein elektrischen Antrieb der eingangs genannten Gattung bekannt. Bei der vorbekannten Lehre ist ein Schaltmittel vorgesehen, mittels der der Elektromotor zur Abschaltung des Motors, insbesondere zur Notabschaltung, kurzgeschlossen werden kann.

Unter dem Begriff "Uberlagerungslenkung" sind sämtliche Lenkungen zu verstehen, bei denen ein vom Fahrer eingestellter Lenkwinkel oder ein eingestelltes Lenkmoment mit einem zusätzlichen Winkel oder einem zusätzlichem Moment überlagert werden kann, insbesondere zur Erhöhung der Fahrstabilität bei der Lenkwinkelüberlagerung und zur Fahrerassistenz, z. B. zur Spurführung, bei der Momentenüberlagerung.

Unter dem Begriff "elektromechanische Bremse" sind sämtliche Bremsanlagen zu verstehen, bei denen eine Bremskraft mit einem elektromechanischen Aktuator, insbesondere einen Elektromotor mit einem angeschlossenen Getriebe, erzeugt wird. Die Bremskraft wird über einen Bremsreibbelag auf eine Bremsscheibe oder eine Bremstrommel übertragen, zwecks Verzögerung des Fahrzeugs.

Ein gezieltes und sicheres Abbremsen oder Anhalten eines Elektromotors wird für viele Anwendungsfälle gefordert. Insbesondere für sicherheitskritische Anwendungen, bei denen der Elektromotor ein Aktuator für eine sicherheitskritische Funktion darstellt, wie beispielsweise in einem Antrieb eines Lenkungssystems für ein Fahrzeug oder für eine elektromechanische Bremse (EMB), ist eine sichere Fehlererbehebungsstrategie zwingend notwendig.

Bürstenlose Elektromotoren bzw. elektronisch kommutierte Elektromotoren gewinnen dabei zunehmend an Bedeutung. Sie ersetzen insbesondere bürstenbehaftete Elektromotoren in derartigen technischen Anwendungen als Aktuatoren. Die Vorteile gegenüber bürstenbehafteten Motoren liegen vor allem im geringen Wartungsaufwand durch Wegfall der Verschleiß unterworfenen Kommutatorbürsten und des prinzipiell höheren Wirkungsgrades durch Wegfall der durch die Bürstenübergangswiderstände hervorgerufenen Kommutatorverluste. Darüber hinaus lassen sich in Verbindung mit "intelligenten" elektronischen Kommutierungseinrichtungen Funktionen realisieren, die mit bürstenbehafteten Motoren nicht möglich oder nur mit einem erheblichen mechanischen Mehraufwand zu erreichen sind.

Da bei bürstenlosen Elektromotoren die Funktionen mechanischer, inherent weitgehend sicherer und zuverlässiger Komponenten, in diesem Fall die Kommutatorbürsten eines Kommutatormotors, durch mechatronische Baugruppen ersetzt werden, muss durch geeignete Maßnahmen die Ausfallsicherheit sichergestellt werden. Bedingt durch die relativ hohe Komplexität der Kommutierungselektronik bürstenloser Motoren ergeben sich auch relativ viele Fehlermöglichkeiten.

Hinzu kommt, dass bei vielen sicherheitskritischen Systemen oft die Motordrehzahl bzw. die Motorlage mit einem Drehzahlsensor bzw. einem Lagesensor gemessen wird und zur Regelung des Systems verwendet wird. Dann ist auch eine bestimmte Fehlerbehandlungsstrategie bei Vorliegen eines Fehlers in der Ermittlung von Motordrehzahl bzw. Motorlage notwendig.

Aufgabe der Erfindung ist es, ein Verfahren anzugeben, das ein sicheres Abbremsen oder Anhalten insbesondere bürstenloser Gleichstrommotoren ermöglicht.

Diese Aufgabe wird mit den Merkmalen der unabhängigen Ansprüche gelöst.

Abhängige Ansprüche sind auf bevorzugte Ausführungsformen der Erfindung gerichtet.

Durch die Erfindung ergibt sich insbesondere der Vorteil, dass ein möglichst rasches Abbremsen erfolgt, ohne die elektronische Ansteuerungseinheit, d. h. die Leistungselektronik, zu überlasten.

Das Verfahren wird vorzugsweise im Fehlerfall zum Abbremsen von elektronisch kommutierten, dreiphasigen, permanenterregten Synchronmotoren SM eingesetzt. Diese bestehen aus den Hauptbaugruppen Ständer (Stator) mit einer Ständerwicklung und Läufer (Rotor) und weisen eine Regeleinheit, vorzugsweise eine PWM-Regelung auf, die eine geeignete Bestromung der Ständerwicklung ermittelt und über Leistungstreiber einregelt.

Erfindungsgemäß ist es bei dem Verfahren vorgesehen, dass überprüft wird, ob (ein) dem Elektromotor, vorzugsweise ein elektronisch kommutierter Gleichstrommotor mit einer PWM-Regelung, zugeführte(r) Ansteuerstrom bzw. Ansteuerströme ermittelbar ist/sind, dass in dem Fall, wenn der/die Ansteuerstrom bzw. Ansteuerströme ermittelt wurde(n), der Elektromotor abgebremst wird, in dem zumindest zeitweise in zumindest einer Motorphase ein Kurzschluss stromgeregelt, insbesondere unter Anlegen eines Stromzeigers über eine PWM bei einem elektronisch kommutierten Gleichstrommotor, erzeugt wird, und dass in dem Fall, wenn der/die Ansteuerstrom bzw. Ansteuerströme nicht ermittelbar ist/sind, der Elektromotor abgebremst wird, in dem zumindest zeitweise in zumindest einer Motorphase ein Kurzschluss drehzahlabhängig oder zeitgesteuert erzeugt wird.

Es ist nach der Erfindung bei dem Verfahren vorgesehen, dass überprüft wird, ob eine aktuelle Drehzahl des Elektromotors, vorzugsweise eines elektronisch kommutierten Gleichstrommotors mit einer PWM-Regelung, ermittelbar ist, dass in dem Fall, wenn die aktuelle Drehzahl ermittelt wurde, der Elektromotor abgebremst wird, in dem zumindest zeitweise in zumindest einer Motorphase ein Kurzschluss drehzahlabhängig von der aktuellen Drehzahl, insbesondere unter Anlegen eines Spannungszeigers über eine PWM bei einem elektronisch kommutierten Gleichstrommotor, erzeugt wird, und dass in dem Fall, wenn die aktuelle Drehzahl des Elektromotors nicht ermittelbar ist, der Elektromotor abgebremst wird, in dem zumindest zeitweise in zumindest einer Motorphase ein Kurzschluss zeitgesteuert erzeugt wird.

Nach der Erfindung ist es bei dem Verfahren vorgesehen, dass überprüft wird, ob eine Drehzahl des Elektromotors, vorzugsweise eines elektronisch kommutierten Gleichstrommotors mit einer PWM-Regelung, zum Zeitpunkt des Fehlers ermittelbar ist, dass in dem Fall, wenn die Drehzahl zum Zeitpunkt des Fehlers ermittelt wurde, der Elektromotor abgebremst wird, in dem zumindest zeitweise in zumindest einer Motorphase ein Kurzschluss zeitgesteuert in Abhängigkeit von der Drehzahl zum Zeitpunkt des Fehlers, insbesondere unter Anlegen eines Spannungszeigers über eine PWM bei einem elektronisch kommutierten Gleichstrommotor, erzeugt wird, und dass in dem Fall, wenn die Drehzahl zum Zeitpunkt des Fehlers nicht ermittelbar ist, der Elektromotor abgebremst wird, in dem zumindest zeitweise in zumindest einer Motorphase ein Kurzschluss zeitgesteuert in Abhängigkeit von einer Maximaldrehzahl des Elektromotors, insbesondere unter Anlegen eines Spannungszeigers über eine.PWM bei einem elektronisch kommutierten Gleichstrommotor, erzeugt wird.

Die Aufgabe wird auch durch einen elektrischer Antrieb für eine Überlagerungslenkung für ein Kraftfahrzeug gelöst, der dadurch gekennzeichnet ist, dass der Elektromotor ein elektronisch kommutierter Gleichstrommotor ist und die elektronische Steuer- und Regelungseinheit eine PWM-Regelung für den Gleichstrommotor aufweist, dass das Erkennungsmittel eine Ansteuerstromermittlung aufweist, zur Ermittlung des dem Gleichstrommotor zugeführten Ansteuerstroms bzw. der Ansteuerströme, dass in dem Fall, wenn durch das Erkennungsmittel ein Fehler erkannt wurde und wenn (ein) Ansteuerstrom bzw. Ansteuerströme ermittelbar ist/sind, der Gleichstrommotor abgebremst wird, in dem das Anhalte- und Ansteuerungsmittel die Leistungselektronik dazu veranlasst, zumindest zeitweise in zumindest einer Motorphase einen Kurzschluss stromgeregelt in Abhängigkeit von dem(n) ermittelten Ansteuerstrom bzw. Ansteuerströme, insbesondere unter Anlegen eines Stromzeigers über der PWM, zu erzeugen, und dass in dem Fall, wenn durch das Erkennungsmittel ein Fehler erkannt wurde und wenn kein(e) Ansteuerstrom bzw. Ansteuerströme ermittelbar ist/sind, der Elektromotor abgebremst wird, in dem zumindest zeitweise in zumindest einer Motorphase ein Kurzschluss drehzahlabhängig in Abhängigkeit von der Gleichstrommotor-Drehzahl oder zeitgesteuert erzeugt wird.

Durch die Erfindung ergibt sich insbesondere der Vorteil, dass ein möglichst rasches Abbremsen erfolgt, ohne die elektronische Ansteuerungseinheit, d. h. die Leistungselektronik, zu überlasten.

Erfindungsgemäß ist es bei dem elektrischen Antrieb vorgesehen, dass der Elektromotor ein elektronisch kommutierter Gleichstrommotor ist und die elektronische Steuer- und Regelungseinheit eine PWM-Regelung für den Gleichstrommotor aufweist, dass das Erkennungsmittel eine Ansteuerstromermittlung aufweist, zur Ermittlung des dem Gleichstrommotor zugeführten Ansteuerstroms bzw. der Ansteuerströme, dass in dem Fall, wenn durch das Erkennungsmittel ein Fehler erkannt wurde und wenn (ein) Ansteuerstrom bzw. Ansteuerströme ermittelbar ist/sind, der Gleichstrommotor abgebremst wird, in dem das Anhalte- und Ansteuerungsmittel die Leistungselektronik dazu veranlasst, zumindest zeitweise in zumindest einer Motorphase einen Kurzschluss stromgeregelt in Abhängigkeit von dem(n) ermittelten Ansteuerstrom bzw. Ansteuerströme, insbesondere unter Anlegen eines Stromzeigers über der PWM, zu erzeugen, und dass in dem Fall, wenn durch das Erkennungsmittel ein Fehler erkannt wurde und wenn kein (e) Ansteuerstrom bzw. Ansteuerströme ermittelbar ist/sind, der Elektromotor abgebremst wird, in dem zumindest zeitweise in zumindest einer Motorphase ein Kurzschluss drehzahlabhängig in Abhängigkeit von der Gleichstrommotor-Drehzahl oder zeitgesteuert erzeugt wird.

Vorteilhaft wird die Drehzahl und die genaue Winkelposition bzw. Phasenlage des Rotors durch eine (absolute) Positionsmessung ermittelt. Das Absolutmeßsystem ist z.B. auf einer Welle, auf welche der Rotor sitzt, angebracht. Es gibt zu jedem Zeitpunkt die genaue Winkellage des Rotors zum Stator an. Als Absolutmeßsystem können beispielsweise sogenannte Resolver, wie Induktionsmesser oder drehbare Transformatoren, oder Hall-Sensoren, eingesetzt werden.

Wenn Drehzahl und Phasenlage bekannt sind, dann können die Phasenströme auch auf Basis von Strangspannungen unter Berücksichtigung von induzierten, drehzahlproportionalen Gegenspannungen geschätzt werden und eine Regelung zum Abbremsen des Elektromotors kann auf Grundlage der geschätzten Phasenströme erfolgen.

Es ist nach der Erfindung bei dem elektrischen Antrieb vorgesehen, dass der Elektromotor ein elektronisch kommutierter Gleichstrommotor ist und die elektronische Steuer- und Regelungseinheit eine PWM-Regelung für den Gleichstrommotor aufweist, dass das Erkennungsmittel eine Motordrehzahlermittlung aufweist, zur Ermittlung der aktuellen Drehzahl des Gleichstrommotors, dass der Gleichstrommotor abgebremst wird, in dem das Anhalte- und Ansteuerungsmittel die Leistungselektronik dazu veranlasst, zumindest zeitweise in zumindest einer Motorphase einen Kurzschluss drehzahlabhängig in Abhängigkeit von der aktuellen Drehzahl, insbesondere durch Anlegen eines Spannungszeigers über der PWM, zu erzeugen, und dass in dem Fall, wenn durch das Erkennungsmittel ein Fehler erkannt wurde und wenn keine aktuelle Motordrehzahl ermittelbar ist, der Elektromotor abgebremst wird, in dem zumindest zeitweise in zumindest einer Motorphase ein Kurzschluss zeitgesteuert erzeugt wird.

Nach der Erfindung ist es bei dem elektrischen Antrieb vorgesehen, dass der Elektromotor ein elektronisch kommutierter Gleichstrommotor ist und die elektronische Steuer- und Regelungseinheit eine PWM-Regelung für den Gleichstrommotor aufweist, dass das Erkennungsmittel eine Motordrehzahlermittlung aufweist, zur Ermittlung der Drehzahl des Gleichstrommotors zum Zeitpunkt des Fehlers, dass der Gleichstrommotor abgebremst wird, in dem das Anhalte- und Ansteuerungsmittel die Leistungselektronik dazu veranlasst, zumindest zeitweise in zumindest einer Motorphase einen Kurzschluss zeitgesteuert in Abhängigkeit von der Drehzahl zum Zeitpunkt des Fehlers, insbesondere durch Anlegen eines Spannungszeigers über der PWM, zu erzeugen, und dass in dem Fall, wenn durch das Erkennungsmittel ein Fehler erkannt wurde und wenn keine Motordrehzahl zum Zeitpunkt des Fehlers ermittelbar ist, der Elektromotor abgebremst wird, in dem zumindest zeitweise in zumindest einer Motorphase ein Kurzschluss zeitgesteuert in Abhängigkeit von der Maximaldrehzahl des Gleichstrommotors erzeugt wird.

Erfindungsgemäß ist es bei dem elektrischen Antrieb vorgesehen, dass zusätzlich eine elektronische Steuer- und Regelungshilfseinheit vorgesehen ist, die ein Abbrems- oder Anhaltehilfsmittel aufweist, zum Abbremsen des Elektromotors, wenn durch das Erkennungsmittel ein Fehler erkannt wurde, der in der elektronischen Steuer- und Regelungseinheit vorliegt und der eine Ansteuerung der Leistungselektronik durch das Anhalte- und Ansteuerungsmittel nicht sicher gewährleistet.

Die Aufgabe wird auch durch ein Computerprogramm gelöst, das dadurch gekennzeichnet ist, dass es Programmschritte aufweist zur Durchführung des Verfahrens nach der Erfindung.

Es ist nach der Erfindung vorgesehen, dass das Verfahren und die Vorrichtung insbesondere für bürstenlose Elektromotoren im Kraftfahrzeugbereich für Lenkungen, wie bei Steer-by-Wire-Systemen oder bei elektrischen Lenkungsunterstützungssystemen, wie Überlagerungslenkungen, oder für Bremssysteme, wie Brake-by-Wire-Systeme, eingesetzt wird.

Durch das erfindungsgemäße Verfahren kann ein Abbremsen erzielt werden, um eine nicht erwünschten Bewegung des Aktors des Lenksystems oder Brake-by-Wire-Systems zu vermeiden.

Ferner kann ein "elektronisches" Festklemmen des Rotors des Motors durchgeführt werden, wobei der Elektromotor in einer bestimmten Lage festgehalten wird.

Danach kann auch eine mechanische Verriegelung durch eine Verriegelungseinheit durchgeführt werden. Ein Vorteil des Verfahrens und des Antriebs liegt darin begründet, dass ein Festhalten des Motors -gegenüber der mechanischen Verriegelung- sehr rasch erfolgen kann, wodurch eine unerwünschte Aktuatorbewegung sicher vermieden wird.

Für sicherheitskritische Steer-by-Wire-Systems oder Brake-by-Wire-Systems ist der den Aktuator antreibende Elektromotor und deren Ansteuerung vorzugsweise redundant ausgeführt. Nach einem erkannten Fehler werden Funktionen des fehlerbehafteten Elektromotors dann ebenso durch die redundanten Systeme gewährleistet.

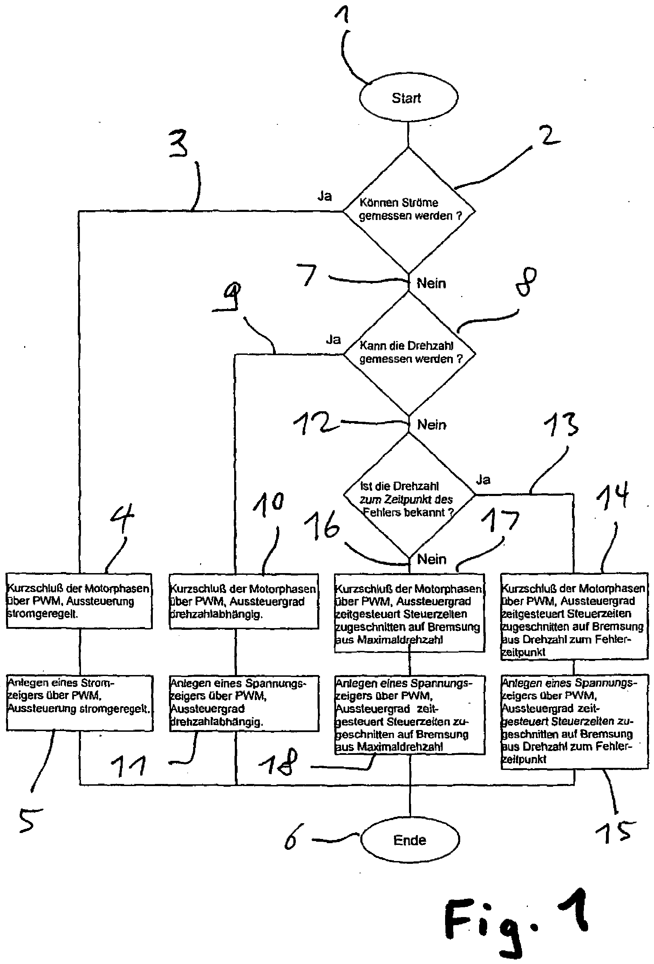

Die Erfindung wird nun anhand von Abbildungen (Fig. 1 bis Fig. 3) und anhand eines Ausführungsbeispiels in der nachfolgenden Beschreibung näher erläutert.
Die Fig. 1 zeigt eine Ausführung einer erfindungsgemäßen Fehlerbehandlungs-Gesamtstrategie für einen elektronisch kommutierter Gleichstrommotor mit einer PWM-Regelung in einer schematischen Übersicht.
Fig. 2 zeigt eine Auftragung des Aussteuergrads A_PWM gegen die Drehzahl n des Motors für ein Abbremsvorgang des Motors.
Fig. 3 zeigt eine Auftragung des Ansteuerstroms I gegen die Drehzahl n des Motors für den Abbremsvorgang des Motors.

Nach dem Start 1 der Fehlerbehandlung wird in einem ersten Schritt 2 geprüft, ob der/die Ansteuerstrom bzw. Ansteuerströme gemessen werden können.

In dem Fall, wenn der/die Ansteuerstrom bzw. Ansteuerströme ermittelt wurde(n) 3, wird der Elektromotor abgebremst, in dem in den Motorphasen über PWM ein Kurzschluss stromgeregelt erzeugt wird 4. Das geschieht unter Anlegen eines Stromzeigers über die PWM und stromgeregelter Aussteuerung 5. Nach Abbremsung des Motors bis zum Stillstand ist die Fehlerbehandlung beendet 6.

Wenn der/die bzw. Ansteuerströme nicht ermittelbar ist/sind 7, wird in einem weiteren Abfrageschritt 8 überprüft, ob eine (aktuelle) Drehzahl des Elektromotors gemessen werden kann.

In dem Fall, wenn die aktuelle Drehzahl ermittelt wurde 9, wird der Elektromotor abgebremst, in dem in den Motorphasen ein Kurzschluss drehzahlabhängig von der aktuellen Drehzahl erzeugt wird 10, unter Anlegen eines Spannungszeigers über die PWM, wobei der Aussteuergrad hier drehzahlabhängig eingestellt wird. Nach Abbremsung des Motors bis zum Stillstand ist die Fehlerbehandlung ebenso beendet 6.

Wenn die aktuelle Drehzahl des Elektromotors nicht ermittelbar ist 12, dann wird der Elektromotor abgebremst, in dem in den Motorphasen ein Kurzschluss zeitgesteuert erzeugt wird.

Hierzu wird in einem weiteren Abfrageschritt 13 ermittelt, ob die Drehzahl zum Zeitpunkt des Fehlers bekannt ist.

Ist dies der Fall, dann wird der Elektromotor abgebremst, in dem in den Motorphasen ein Kurzschluss zeitgesteuert, zugeschnitten auf ein Abbremsen aus dieser Drehzahl zum Zeitpunkt des Fehlers, erzeugt wird über die PWM 14. Dazu wird ein Spannungszeigers über die PWM angelegt. Der Austeuergrad wird dabei zeitgesteuert nach Maßgabe der Drehzahl zum Zeitpunkt des Fehlers eingestellt 15. Nach Abbremsung des Motors bis zum Stillstand ist die Fehlerbehandlung ebenso beendet 6.

In dem anderen Fall, wenn die Drehzahl zum Zeitpunkt des Fehlers nicht ermittelbar ist 16, wird der Elektromotor nur abgebremst, in dem in den Motorphasen ein Kurzschluss zeitgesteuert in Abhängigkeit von der (bekannten) Maximaldrehzahl des Elektromotors über die PWM erzeugt wird 17, insbesondere unter Anlegen eines Spannungszeigers über die PWM 18. Nach Abbremsung des Motors bis zum Stillstand ist die Fehlerbehandlung ebenso beendet 6.

Das Verfahren wird zum Abbremsen eines Elektromotors bis zum Stillstand verwendet, der beispielsweise als Aktuator einer Antriebseinheit einer aktiven Überlagerungslenkung (ESAS) oder einer elektromechanischen Bremse (EMB) dient. Um in einem fehlerhaften Betrieb das unkontrollierte Einstellen eines ungewünschten Lenkwinkels zu vermeiden, muss die Antriebseinheit des ESAS-Systems bei einem erkannten Fehlerfall innerhalb möglichst kurzer Zeit abgebremst und mechanisch verriegelt werden.

Da insbesondere ein Fehler in der Motorlagesensierung oder in der elektronischen Steuer- und Regelungseinheit (Ansteuer-CPU) zur fehlerhaften Einstellung eines ungewünschten Lenkwinkels führen kann, ist es vorgesehen, die Bremsfunktion auch ohne diese Bauteile zu realisieren.

Bei dem erfindungsgemäßen Verfahren wird dazu im Fehlerfall die Ansteuerung der mit dem Elektromotors verbundenen elektronischen Ansteuerungseinheit, d. h. die Leistungselektronik (Wechselrichtertransistoren oder Endstufentransistoren) von einem unabhängigen Bauteil, eine elektronische Steuer- und Regelungshilfseinheit, übernommen. Dieses Bauteil steuert den elektrischen Abbremsvorgang in mehreren Schritten.

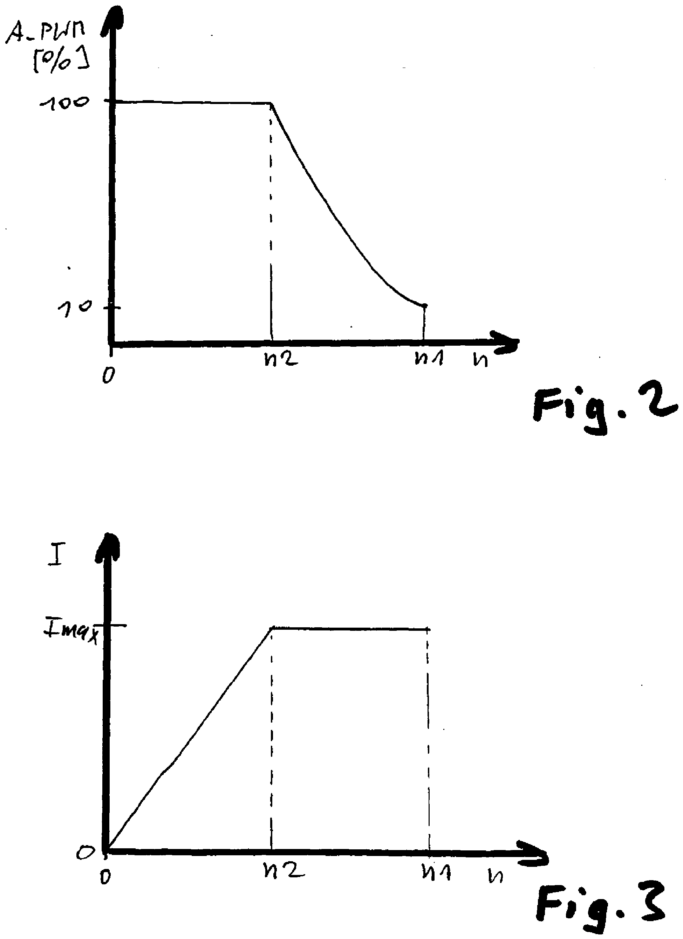

Der Abbremsvorgang wird durchgeführt, in dem in einem Betriebszustand die Motorphasen unter Verwendung der Endstufentransistoren untereinander kurzgeschlossen werden. Durch die Drehung des Motors wird eine Spannung induziert, die wiederum einen Strom treibt, der ein Bremsmoment auf die Motorwelle bringt. Zur Begrenzung des Bremsstromes und zum Schutz der Transistoren erfolgt deren Ansteuerung mit einem pulsweitenmodulierten, angepassten Signal (PWM-Regelung) (siehe Fig. 2).

Bei sinkender Drehzahl n verringert sich auch die induzierte Spannung, weshalb der Aussteuergrad A_PWM erhöht werden muss von einer ersten Drehzahl n1 und einem ersten Aussteuergrad A_PWM, hier 10% (bei Beginn des Abbremsenvorgangs) bis zu einem maximalen Wert A_PWM = 100%,bei der eine zweite Drehzahl n2 anliegt und wobei der maximale Wert A_PWM = 100 % beibehalten wird, bis zum Stillstand (n = 0).

In der Fig. 3 ist der dazu korrespondierende Verlauf des Ansteuerstroms gezeigt, der bis zu einer unteren Drehzahl n2 auf einen Wert Imax begrenzt wird, damit die Leistungselektronik nicht überlastet wird.

Soll bzw. muss auf die Messung von Strom und Drehzahl verzichtet werden, so erfolgt die Auswahl des Aussteuergrades zeitgesteuert. Dabei wird die Ansteuerung zu Grunde gelegt, die beim Abbremsen von der maximal möglichen Drehzahl im Fehlerfall notwendig wäre. Dadurch können gleichzeitig maximal mögliche Bremszeiten und Fehlerwinkel festgelegt werden. Der Ansteuergrad beträgt am Ende dieses Betriebszustandes 100 %. Dabei kann die Last auf verschiedene Endstufentransistoren, insbesondere jeweils die High- und Lowside-Schalter, verteilt werden, in dem diese wechselweise einschaltet werden.

Es ist vorteilhaft vorgesehen, dass die Auswahl der beteiligten Schalter und Motorphasen außerdem von der Auswertung entsprechender Fehlersignale abhängt.

Beim Erreichen einer unteren Drehzahl bzw. nach Verstreichen einer entsprechenden Zeit ist der sich einstellende Bremsstrom so gering, dass er nur noch ein sehr geringes Bremsmoment aufbringt. In dieser Phase des Bremsvorganges kann eine Spannung an die Wicklungen angelegt werden, die einen winkelfesten Motorstrom treibt. Dieser wirkt sich dann wie eine Art "elektrische Raste" aus und kann so ein zusätzliches Bremsmoment aufbringen. Die Höhe der entsprechenden Spannung wird ebenfalls durch Pulsweitenmodulation PWM eingestellt und zustandsabhängig oder zeitabhängig erhöht.

Bei dem Bauteil zur Ansteuerung des Bremsvorganges kann es sich in einfachsten Fall um einen relativ kleinen Logikbaustein handeln. Bei entsprechender Erhöhung der Rechenleistung können dann zusätzlich Sensorsignale eingelesen, Modelle berechnet und Fehlerüberwachungen selbstständig durchgeführt werden. Als letzte Rückfallebene wird vorteilhaft jedoch immer das beschriebene Verfahren eingesetzt.

Zusammenfassend ergeben sich folgenden vorteilhafte Eigenschaften der Erfindung:

Bei Erkennung eines Fehlers wird die aktuelle Drehbewegung des Motors sowohl durch mechanische, als auch durch elektrische Maßnahmen bis zum Stillstand gebremst.

Die elektrische Bremsung kann von einem unabhängigen Baustein eingeleitet und gesteuert werden.

Der elektrische Bremsvorgang erfolgt in mindestens zwei Betriebszuständen, wobei im ersten Betriebszustand nur die induzierte Spannung zur Einprägung eines Stromes genutzt wird und im zweiten Zustand eine zusätzliche Spannung angelegt wird.

Der Wechsel zwischen den Zuständen und die Aussteuergrade der Endstufenschalter kann zeitgesteuert oder abhängig von Sensordaten erfolgen.

Bei Vorliegen von Strom- oder Drehzahlinformationen können auch diese in die Bremsansteuerung eingehen und die Ansteuerung der Endstufenschalter beeinflussen.

Die Auswahl der genutzten Endstufenschalter und die Art der Modulation kann von dem Zustand der Endstufenschalter bzw. der Art des aufgetretenen Fehlers abhängig gemacht werden.

Durch gezielte Einprägung von Strömen und Messung von verschiedenen Zustandsgrößen können Informationen über den Zustand des Systems gewonnen werden.

Die Überwachungseinheit kann auch über Fehlererkennungsmechanismen verfügen und kann dann bei sicher erkannten Fehlern die Antriebseinheit selbstständig abbremsen und verriegeln.

Das Verfahren ist vorteilhaft bei sämtlichen elektronisch kommutierten Motoren mit Lagesensorik einsetzbar, unabhängig vom umgesetzten Prinzip der Motorregelung und daher insbesondere sowohl für polradorientierte, als auch statororientierte Regelung einsetzbar.

So können vorteilhaft auch Fehler erkannt werden, die eine Verstärkung oder Verringerung des Drehmoments zur Folge haben, wie Fehler, die Momentenwelligkeiten am Antriebsmoment hervorrufen. Dies ist vor allem bei Systemen mit einer taktilen Schnittstelle zum Bediener, z. B. elektrische Servolenksysteme oder Steer-by-Wire-Systeme mit Handmomentensteller, von großer Bedeutung.

## Patentansprüche

1. Verfahren zum Abbremsen oder Anhalten eines mit Gleichstrom betreibbaren Elektromotors, insbesondere eines bürstenlosen Gleichstrommotors, bei Vorliegen eines Fehlers des Elektromotors oder damit verbundener Einheiten, wobei das Vorliegen bestimmter Fehlerzustände überprüft wird und der Elektromotor abgebremst wird, in dem zumindest zeitweise eine dem erkannten, bestimmten Fehlerzustand angepasste Ansteuerung des Elektromotors durchgeführt wird unter Berücksichtigung einer maximalen Belastbarkeit einer mit dem Elektromotors verbundenen elektronischen Ansteuerungseinheit,
**dadurch gekennzeichnet, dass** überprüft wird, ob (ein) dem Elektromotor, vorzugsweise ein elektronisch kommutierter Gleichstrommotor mit einer PWM-Regelung, zugeführte(r) Ansteuerstrom bzw. Ansteuerströme ermittelbar ist/sind, dass in dem Fall, wenn der/die Ansteuerstrom bzw. Ansteuerströme ermittelt wurde(n), der Elektromotor abgebremst wird, in dem zumindest zeitweise in zumindest einer Motorphase ein Kurzschluss stromgeregelt, insbesondere unter Anlegen eines Stromzeigers über eine PWM bei einem elektronisch kommutierten Gleichstrommotor, erzeugt wird,
und dass in dem Fall, wenn der/die Ansteuerstrom bzw. Ansteuerströme nicht ermittelbar ist/sind, der Elektromotor abgebremst wird, in dem zumindest zeitweise in zumindest einer Motorphase ein Kurzschluss drehzahlabhängig oder zeitgesteuert erzeugt wird.

2. Verfahren nach Anspruch 1,
**dadurch gekennzeichnet, dass** überprüft wird, ob eine aktuelle Drehzahl des Elektromotors, vorzugsweise eines elektronisch kommutierten Gleichstrommotors mit einer PWM-Regelung, ermittelbar ist,
dass in dem Fall, wenn die aktuelle Drehzahl ermittelt wurde, der Elektromotor abgebremst wird, in dem zumindest zeitweise in zumindest einer Motorphase ein Kurzschluss drehzahlabhängig von der aktuellen Drehzahl, insbesondere unter Anlegen eines Spannungszeigers über eine PWM bei einem elektronisch kommutierten Gleichstrommotors, erzeugt wird,
und dass in dem Fall, wenn die aktuelle Drehzahl des Elektromotors nicht ermittelbar ist, der Elektromotor abgebremst wird, in dem zumindest zeitweise in zumindest einer Motorphase ein Kurzschluss zeitgesteuert erzeugt wird.

3. Verfahren nach einem der Ansprüche 1 oder 2,
**dadurch gekanazeichnet,** dass überprüft wird, ob eine Drehzahl des Elektromotors, vorzugsweise eines elektronisch kommutierten Gleichstrommotors mit einer PWM-Regelung, zum Zeitpunkt des Fehlers ermittelbar ist, dass in dem Fall, wenn die Drehzahl zum Zeitpunkt des Fehlers ermittelt wurde, der Elektromotor abgebremst wird, in dem zumindest zeitweise in zumindest einer Motorphase ein Kurzschluss zeitgesteuert in Abhängigkeit von der Drehzahl zum Zeitpunkt des Fehlers, insbesondere unter Anlegen eines Spannungszeigers über eine PWM bei einem elektronisch kommutierten Gleichstrommotors, erzeugt wird, und dass in dem Fall, wenn die Drehzahl zum Zeitpunkt des Fehlers nicht ermittelbar ist, der Elektromotor abgebremst wird, in dem zumindest zeitweise in zumindest einer Motorphase ein Kurzschluss zeitgesteuert in Abhängigkeit von einer Maximaldrehzahl des Elektromotors, insbesondere unter Anlegen eines Spannungszeigers über eine PWM bei einem elektronisch kommutierten Gleichstrommotors, erzeugt wird.

4. Elektrischer Antrieb für eine Überlagerungslenkung für ein Kraftfahrzeug oder für eine elektromechanische Bremse (EMB), der einen mit Gleichstrom betreibbaren Elektromotor, insbesondere einen bürstenlosen Gleichstrommotor, eine elektronische Steuer- und Regelungseinheit und eine Leistungselektronikeinheit zur Ansteuerung des Elektromotors aufweist, wobei die elektronische Steuer- und Regelungseinheit ein Erkennungsmittel aufweist, zum Erkennen eines Fehlers des Elektromotors und/oder einer damit verbundenen elektronischen Einheit,
und die elektronische Steuer- und Regelungseinheit ein Abbrems- oder Anhaltemittel aufweist, zum Abbremsen des Elektromotors, wenn durch das Erkennungsmittel ein Fehler erkannt wurde, in dem das Abbrems- und Anhaltemittel die Leistungselektronik dazu veranlasst, zumindest zeitweise in zumindest einer Motorphase einen Kurzschluss in Abhängigkeit von dem erkannten, bestimmten Fehlerzustand zu erzeugen unter Berücksichtigung einer maximalen Belastbarkeit der Leistungselektronik, **dadurch gekennzeichnet,**
**dass** der Elektromotor ein elektronisch kommutierter Gleichstrommotor ist und die elektronische Steuer- und Regelungseinheit eine PWM-Regelung für den Gleichstrommotor aufweist, dass das Erkennungsmittel eine Ansteuerstromermittlung aufweist, zur Ermittlung des dem Gleichstrommotor zugeführten Ansteuerstroms bzw. der Ansteuerströme,
**dass** in dem Fall, wenn durch das Erkennungsmittel ein Fehler erkannt wurde und wenn (ein) Ansteuerstrom bzw. Ansteuerströme ermittelbar ist/sind, der Gleichstrommotor abgebremst wird, in dem das Anhalte- und Ansteuerungsmittel die Leistungselektronik dazu veranlasst, zumindest zeitweise in zumindest einer Motorphase einen Kurzschluss stromgeregelt in Abhängigkeit von dem(n) ermittelten Ansteuerstrom bzw. Ansteuerströme, insbesondere unter Anlegen eines Stromzeigers über der PWM, zu erzeugen,
und **dass** in dem Fall, wenn durch das Erkennungsmittel ein Fehler erkannt wurde und wenn kein(e) Ansteuerstrom bzw. Ansteuerströme ermittelbar ist/sind, der Elektromotor abgebremst wird, in dem zumindest zeitweise in zumindest einer Motorphase ein Kurzschluss drehzahlabhängig in Abhängigkeit von der Gleichstrommotor-Drehzahl oder zeitgesteuert erzeugt wird.

5. Elektrischer Antrieb nach Anspruch 4,
**dadurch gekennzeichnet, dass** der Elektromotor ein elektronisch kommutierter Gleichstrommotor ist und die elektronische Steuer- und Regelungseinheit eine PWM-Regelung für den Gleichstrommotor aufweist, dass das Erkennungsmittel eine Motordrehzahlermittlung aufweist, zur Ermittlung der aktuellen Drehzahl des Gleichstrommotors,
dass der Gleichstrommotor abgebremst wird, in dem das Anhalte- und Ansteuerungsmittel die Leistungselektronik dazu veranlasst, zumindest zeitweise in zumindest einer Motorphase einen Kurzschluss drehzahlabhängig in Abhängigkeit von der aktuellen Drehzahl, insbesondere durch Anlegen eines Spannungszeigers über der PWM, zu erzeugen,
und dass in dem Fall, wenn durch das Erkennungsmittel ein Fehler erkannt wurde und wenn keine aktuelle Motordrehzahl ermittelbar ist, der Elektromotor abgebremst wird, in dem zumindest zeitweise in zumindest einer Motorphase ein Kurzschluss zeitgesteuert erzeugt wird.

6. Elektrischer Antrieb nach einem der Ansprüche 4 oder 5,
**dadurch gekennzeichnet, dass** der Elektromotor ein elektronisch kommutierter Gleichstrommotor ist und die elektronische Steuer- und Regelungseinheit eine PWM-Regelung für den Gleichstrommotor aufweist, dass das Erkennungsmittel eine Motordrehzahlermittlung aufweist, zur Ermittlung der Drehzahl des Gleichstrommotors zum Zeitpunkt des Fehlers,
dass der Gleichstrommotor abgebremst wird, in dem das Anhalte- und Ansteuerungsmittel die Leistungselektronik dazu veranlasst, zumindest zeitweise in zumindest einer Motorphase einen Kurzschluss zeitgesteuert in Abhängigkeit von der Drehzahl zum Zeitpunkt des Fehlers, insbesondere durch Anlegen eines Spannungszeigers über der PWM, zu erzeugen,
und dass in dem Fall, wenn durch das Erkennungsmittel ein Fehler erkannt wurde und wenn keine Motordrehzahl zum Zeitpunkt des Fehlers ermittelbar ist, der Elektromotor abgebremst wird, in dem zumindest zeitweise in zumindest einer Motorphase ein Kurzschluss zeitgesteuert in Abhängigkeit von der Maximaldrehzahl des Gleichstrommotors erzeugt wird.

7. Elektrischer Antrieb nach einem der Ansprüche 4 bis 6, **dadurch gekennzeichnet, dass** zusätzlich eine elektronische Steuer- und Regelungshilfseinheit vorgesehen ist, die ein Abbrems- oder Anhaltehilfsmittel aufweist, zum Abbremsen des Elektromotors, wenn durch das Erkennungsmittel ein Fehler erkannt wurde, der in der elektronischen Steuer- und Regelungseinheit vorliegt und der eine Ansteuerung der Leistungselektronik durch das Anhalte- und Ansteuerungsmittel nicht sicher gewährleistet.

## Claims

1. Method for braking or stopping an electric motor which can be operated with direct current, in particular a brushless DC motor, if there is a fault in the electric motor or units connected to the latter, the presence of particular fault states being checked and the electric motor being braked by at least temporarily controlling the electric motor in a manner adapted to the detected particular fault state taking into account a maximum load-bearing capacity of an electronic control unit connected to the electric motor,
**characterized in that** a check is carried out in order to determine whether (a) control current(s) supplied to the electric motor, preferably an electronically commutated DC motor with PWM regulation, can be determined,
**in that**, if the control current(s) has/have been determined, the electric motor is braked by at least temporarily producing a short circuit in at least one motor phase in a current-regulated manner, in particular by applying a current phasor via PWM in an electronically commutated DC motor, and **in that**, if the control current(s) cannot be determined, the electric motor is braked by at least temporarily producing a short circuit in at least one motor phase in a speed-dependent or time-controlled manner.

2. Method according to Claim 1,
**characterized in that** a check is carried out in order to determine whether an instantaneous speed of the electric motor, preferably an electronically commutated DC motor with PWM regulation, can be determined,
**in that**, if the instantaneous speed has been determined, the electric motor is braked by at least temporarily producing a short circuit in at least one motor phase in a manner dependent on the instantaneous speed, in particular by applying a voltage phasor via PWM in an electronically commutated DC motor,
and **in that**, if the instantaneous speed of the electric motor cannot be determined, the electric motor is braked by at least temporarily producing a short circuit in at least one motor phase in a time-controlled manner.

3. Method according to either of Claims 1 and 2, **characterized in that** a check is carried out in order to determine whether a speed of the electric motor, preferably an electronically commutated DC motor with PWM regulation, can be determined at the time of the fault,
**in that**, if the speed has been determined at the time of the fault, the electric motor is braked by at least temporarily producing a short circuit in at least one motor phase in a time-controlled manner on the basis of the speed at the time of the fault, in particular by applying a voltage phasor via PWM in an electronically commutated DC motor,
and **in that**, if the speed cannot be determined at the time of the fault, the electric motor is braked by at least temporarily producing a short circuit in at least one motor phase in a time-controlled manner on the basis of a maximum speed of the electric motor, in particular by applying a voltage phasor via PWM in an electronically commutated DC motor.

4. Electrical drive for superimposed steering for a motor vehicle or for an electromechanical brake (EMB), which has an electric motor which can be operated with direct current, in particular a brushless DC motor, an electronic control and regulation unit and a power electronic unit for controlling the electric motor, the electronic control and regulation unit having a detection means for detecting a fault in the electric motor and/or an electronic unit connected to the latter, and the electronic control and regulation unit having a braking or stopping means for braking the electric motor if the detection means has detected a fault by virtue of the braking and stopping means causing the power electronics to at least temporarily produce a short circuit in at least one motor phase on the basis of the detected particular fault state taking into account a maximum load-bearing capacity of the power electronics, **characterized**
**in that** the electric motor is an electronically commutated DC motor and the electronic control and regulation unit has PWM regulation for the DC motor, in that the detection means has a control current determination unit for determining the control current(s) supplied to the DC motor,
**in that**, if the detection means has detected a fault and if (a) control current (s) can be determined, the DC motor is braked by virtue of the stopping and control means causing the power electronics to at least temporarily produce a short circuit in at least one motor phase in a current-regulated manner on the basis of the determined control current(s), in particular by applying a current phasor via the PWM,
and **in that**, if the detection means has detected a fault and if no control current (s) can be determined, the electric motor is braked by at least temporarily producing a short circuit in at least one motor phase in a speed-dependent manner on the basis of the DC motor speed or in a time-controlled manner.

5. Electrical drive according to Claim 4, **characterized in that** the electric motor is an electronically commutated DC motor and the electronic control and regulation unit has PWM regulation for the DC motor, **in that** the detection means has a motor speed determination unit for determining the instantaneous speed of the DC motor,
**in that** the DC motor is braked by virtue of the stopping and control means causing the power electronics to at least temporarily produce a short circuit in at least one motor phase in a speed-dependent manner on the basis of the instantaneous speed, in particular by applying a voltage phasor via the PWM,
and **in that**, if the detection means has detected a fault and if an instantaneous motor speed cannot be determined, the electric motor is braked by at least temporarily producing a short circuit in at least one motor phase in a time-controlled manner.

6. Electrical drive according to either of Claims 4 and 5,
**characterized in that** the electric motor is an electronically commutated DC motor and the electronic control and regulation unit has PWM regulation for the DC motor, **in that** the detection means has a motor speed determination unit for determining the speed of the DC motor at the time of the fault,
**in that** the DC motor is braked by virtue of the stopping and control means causing the power electronics to at least temporarily produce a short circuit in at least one motor phase in a time-controlled manner on the basis of the speed at the time of the fault, in particular by applying a voltage phasor via the PWM,
and **in that**, if the detection means has detected a fault and if a motor speed cannot be determined at the time of the fault, the electric motor is braked by at least temporarily producing a short circuit in at least one motor phase in a time-controlled manner on the basis of the maximum speed of the DC motor.

7. Electrical drive according to one of Claims 4 to 6,
**characterized in that** an electronic control and regulation auxiliary unit is additionally provided and has a braking or stopping auxiliary means for braking the electric motor if the detection means has detected a fault which is present in the electronic control and regulation unit and does not reliably ensure control of the power electronics by the stopping and control means.

## Revendications

1. Procédé de freinage ou de mise à l'arrêt d'un moteur électrique pouvant fonctionner avec du courant continu, notamment d'un moteur à courant continu sans balai, en présence d'un défaut du moteur électrique ou des unités qui y sont reliées, la présence de certaines situations de défaut étant contrôlée et le moteur électrique étant freiné en ce qu'une excitation du moteur électrique adaptée à la situation de défaut spécifique détectée est effectuée au moins temporairement en tenant compte d'une capacité de charge maximale d'une unité d'excitation électronique reliée au moteur électrique,
**caractérisé en ce qu'**un contrôle est effectué pour vérifier si un courant d'excitation ou des courants d'excitation acheminé(s) au moteur électrique, de préférence à un moteur à courant continu à commutation électronique muni d'une régulation PWM, peut/peuvent être déterminé(s),
**en ce que** dans le cas où le/les courant(s) d'excitation a/ont été déterminé(s), le moteur électrique est freiné en générant au moins temporairement dans au moins une phase du moteur un court-circuit à courant régulé, notamment en appliquant un indicateur de courant sur une PWM dans le cas d'un moteur à courant continu à commutation électronique,
et **en ce que** dans le cas où le/les courant(s) d'excitation ne peut/peuvent pas être déterminé(s), le moteur électrique est freiné en générant au moins temporairement dans au moins une phase du moteur un court-circuit en fonction de la vitesse de rotation ou commandé dans le temps.

2. Procédé selon la revendication 1, **caractérisé en ce qu'**un contrôle est effectué pour vérifier si une vitesse de rotation actuelle du moteur électrique, de préférence d'un moteur à courant continu à commutation électronique muni d'une régulation PWM, peut être déterminée,
**en ce que** dans le cas où la vitesse de rotation actuelle a été déterminée, le moteur électrique est freiné en générant au moins temporairement dans au moins une phase du moteur un court-circuit en fonction de la vitesse de rotation actuelle, notamment en appliquant un indicateur de tension sur une PWM dans le cas d'un moteur à courant continu à commutation électronique,
et **en ce que** dans le cas où la vitesse de rotation actuelle du moteur électrique ne peut pas être déterminée, le moteur électrique est freiné en générant au moins temporairement dans au moins une phase du moteur un court-circuit commandé dans le temps.

3. Procédé selon l'une des revendications 1 ou 2, **caractérisé en ce qu'**un contrôle est effectué pour vérifier si une vitesse de rotation du moteur électrique, de préférence à un moteur à courant continu à commutation électronique muni d'une régulation PWM, peut être déterminée à l'instant du défaut,
**en ce que** dans le cas où la vitesse de rotation à l'instant du défaut a été déterminée, le moteur électrique est freiné en générant au moins temporairement dans au moins une phase du moteur un court-circuit commandé dans le temps en fonction de la vitesse de rotation à l'instant du défaut, notamment en appliquant un indicateur de tension sur une PWM dans le cas d'un moteur à courant continu à commutation électronique,
et **en ce que** dans le cas où la vitesse de rotation à l'instant du défaut ne peut pas être déterminée, le moteur électrique est freiné en générant au moins temporairement dans au moins une phase du moteur un court-circuit commandé dans le temps en fonction d'une vitesse de rotation maximale du moteur électrique, notamment en appliquant un indicateur de tension sur une PWM dans le cas d'un moteur à courant continu à commutation électronique.

4. Mécanisme d'entraînement électrique pour une direction à superposition pour un véhicule automobile ou pour un frein électromécanique (EMB), lequel possède un moteur électrique pouvant fonctionner avec du courant continu, notamment un moteur à courant continu sans balai, une unité électronique de commande et de régulation et une unité électronique de puissance destinée à exciter le moteur électrique, l'unité électronique de commande et de régulation possédant un moyen de détection destiné à détecter un défaut du moteur électrique et/ou d'une unité électronique qui y est reliée,
et l'unité électronique de commande et de régulation possédant un moyen de freinage ou de mise à l'arrêt destiné à freiner le moteur électrique lorsqu'un défaut a été détecté par le biais du moyen de détection, en ce que le moyen de freinage et de mise à l'arrêt amène l'unité électronique de puissance à générer au moins temporairement dans au moins une phase du moteur un court-circuit en fonction de la situation de défaut spécifique détectée en tenant compte d'une capacité de charge maximale de l'électronique de puissance, **caractérisé en ce que** le moteur électrique est un moteur à courant continu à commutation électronique et l'unité électronique de commande et de régulation possède une régulation PWM pour le moteur à courant continu, **en ce que** le moyen de détection possède un dispositif de détermination de courant d'excitation destiné à déterminer le ou les courant(s) d'excitation acheminé(s) au moteur à courant continu,
**en ce que** dans le cas où un défaut a été détecté par le moyen de détection et où un/des courant(s) d'excitation est/sont déterminable(s), le moteur à courant continu est freiné **en ce que** le moyen de freinage et de mise à l'arrêt amène l'électronique de puissance à générer au moins temporairement dans au moins une phase du moteur un court-circuit à courant régulé en fonction du courant d'excitation ou des courants d'excitation déterminé(s), notamment en appliquant un indicateur de courant sur la PWM,
**en ce que** dans le cas où un défaut a été détecté par le moyen de détection et où aucun courant d'excitation ne peut être déterminé, le moteur électrique est freiné en générant au moins temporairement dans au moins une phase du moteur un court-circuit en fonction de la vitesse de rotation en fonction de la vitesse de rotation du moteur à courant continu.

5. Mécanisme d'entraînement électrique selon la revendication 4,
**caractérisé en ce que** le moteur électrique est un moteur à courant continu à commutation électronique et l'unité électronique de commande et de régulation possède une régulation PWM pour le moteur à courant continu, **en ce que** le moyen de détection possède un dispositif de détermination de la vitesse de rotation du moteur destiné à déterminer la vitesse de rotation actuelle du moteur à courant continu,
**en ce que** le moteur à courant continu est freiné **en ce que** le moyen de freinage et de mise à l'arrêt amène l'électronique de puissance à générer au moins temporairement dans au moins une phase du moteur un court-circuit en fonction de la vitesse de rotation en fonction de la vitesse de rotation actuelle, notamment en appliquant un indicateur de tension sur la PWM,
et **en ce que** dans le cas où un défaut a été détecté par le moyen de détection et où aucune vitesse de rotation actuelle ne peut être déterminée, le moteur électrique est freiné en générant au moins temporairement dans au moins une phase du moteur un court-circuit commandé dans le temps.

6. Mécanisme d'entraînement électrique selon l'une des revendications 4 ou 5,
**caractérisé en ce que** le moteur électrique est un moteur à courant continu à commutation électronique et l'unité électronique de commande et de régulation possède une régulation PWM pour le moteur à courant continu, **en ce que** le moyen de détection possède un dispositif de détermination de la vitesse de rotation du moteur destiné à déterminer la vitesse de rotation du moteur à courant continu à l'instant du défaut,
**en ce que** le moteur à courant continu est freiné **en ce que** le moyen de freinage et de mise à l'arrêt amène l'électronique de puissance à générer au moins temporairement dans au moins une phase du moteur un court-circuit commandé dans le temps en fonction de la vitesse de rotation à l'instant du défaut, notamment en appliquant un indicateur de tension sur la PWM,
et **en ce que** dans le cas où un défaut a été détecté par le moyen de détection et où aucune vitesse de rotation à l'instant du défaut ne peut être déterminée, le moteur électrique est freiné en générant au moins temporairement dans au moins une phase du moteur un court-circuit commandé dans le temps en fonction de la vitesse de rotation maximale du moteur à courant continu.

7. Mécanisme d'entraînement électrique selon l'une des revendications 4 à 6, **caractérisé en ce qu'**une unité électronique auxiliaire de commande et de régulation est prévue en plus, laquelle possède un moyen de freinage ou de mise à l'arrêt destiné à freiner le moteur électrique lorsqu'un défaut a été détecté par le moyen de détection, lequel se trouve dans l'unité électronique de commande et de régulation et ne garantit pas avec certitude une excitation de l'électronique de puissance par le moyen de mise à l'arrêt et d'excitation.
